# EUROPÄISCHE PATENTSCHRIFT

(11) **EP 1 913 660 B1**
(45) Veröffentlichungstag und Bekanntmachung des Hinweises auf die Patenterteilung: **10.12.2008**
(21) Anmeldenummer: 05767782.5
(22) Anmeldetag: 08.08.2005
(51) Int. Cl.: H01R 13/639, H01R 24/00

(54) **SICHERUNGSVORRICHTUNG FÜR EINEN STECKER (PATCH GUARD)**
SECURITY DEVICE FOR A PLUG (PATCH GUARD)
DISPOSITIF DE SECURITE POUR UNE FICHE MALE (PROTECTION DE CONNEXION)

(43) Veröffentlichungstag der Anmeldung: 23.04.2008
(73) Patentinhaber: Reichle & De-Massari AG, 8622 Wetzikon (CH)
(72) Erfinder: ANDRES, Hans, CH-8340 Hinwil (CH); BOUVARD, Hans-Peter, CH-2503 Biel (CH); BÜRGLER, Thomas, CH-8834 Schindellegi (CH); GERBER, Matthias, CH-8630 Rüti (CH); MARTY, Hugo, CH-8366 Wolfhausen (CH)
(74) Vertreter: Alder, Hans Rudi
(86) Internationale Anmeldenummer: PCT/CH2005/000461
(87) Internationale Veröffentlichungsnummer: WO 2007/016794

(56) Entgegenhaltungen:
- US-A- 4 647 726
- US-A- 5 090 916
- US-A- 5 478 252
- US-A- 5 556 295
- US-A1- 2003 063 862
- US-A1- 2004 202 431

## Beschreibung

Die vorliegende Erfindung betrifft eine Sicherungsvorrichtung für einen Stecker gemäss Oberbegriff des Anspruchs 1.

Mit der zunehmenden Vernetzung elektronischer Geräte im Geschäftsbereich und insbesondere im automatisierten Fertigungsbereich der modernen Industrie erhält die Sicherung von Steckverbindungen eine immer grösser werdende Bedeutung. Ein unkontrollierter Unterbruch der Datenübertragung innerhalb eines solchen Netzwerkes kann zu Fehlsteuerungen, kostspieligen Produktionsausfällen oder fatalen Datenverlusten führen.

Es sind deshalb in den letzten Jahren Vorrichtungen entwickelt worden um die Sicherheit und Zuverlässigkeit von Verkabelungen und Steckverbindungen zu verbessern. So ist beispielsweise aus der WO 021075859 eine Sicherungsvorrichtung für eine Steckverbindung bekannt, bei welcher die Steckbuchse mit einem nach aussen ragenden, kragenförmigen Sicherungselement versehen ist, in welches ein handelsüblicher RJ-45 Stecker einsteckbar ist. Dabei wird die Sperrklinke dieses Steckers von dem Sicherungselement vollständig abgedeckt und verunmöglicht eine ungewollte Betätigung der Sperrklinke. Diese Steckverbindung lässt sich nur mit einem geeigneten Schlüssel wieder lösen und hat sich in der Praxis bewährt. Bei der Verwendung mehrerer solchermassen gesicherter und dicht nebeneinander angeordneter Steckverbindungen ist die Steckplatzdichte auf einem entsprechenden Steckplatzfeld durch die Breite des kragenförmigen Sicherungselementes begrenzt. Es besteht heute jedoch das Bedürfnis die Anzahl verwendbarer Steckplätze auf einem Steckplatzfeld weiter zu erhöhen

Es wurde deshalb mit der US 6,863,556 ein Stecker-Bausatz vorgeschlagen, bei welchem die Sperrklinke des Steckers gabelförmig ausgebildet ist. Um eine ungewollte Trennung der Steckverbindung zu verhindern ist über dem Stecker eine verschiebbar angeordnete Hülse vorgesehen, welche manuell verschoben werden muss, um die Sperrklinke aus korrespondierenden Rastnasen in der Steckerbuchse auszuklinken und so den Stecker aus der Steckerbuchse entnehmen zu können. Leider erfordert dieser vollständig neu konzipierte Bausatz das Umrüsten bestehender Verkabelungsanordnungen und lassen sich bereits ausgerüstete Steckplatzfelder nicht in einfacher Weise damit nachrüsten.

Ebenso erfordern auch die aus der US 6,851,957 oder US 6,821,024 bekannten Sicherungsvorrichtungen besondere Änderungen in der Formgebung des Steckergehäuses.

Ein anderer Vorschlag für die Konstruktion einer Sicherungsvorrichtung ist aus der US 2003/0063862 bekannt. Diese Druckschrift beschreibt einen optischen Duplex-Verbinder, an dessen Steckerteil ein kompliziert aufgebautes Gehäuse angebracht ist. Dieses Gehäuse weist eine Klappe auf, welche über das Ende der Steckerklinken ragt und über einen Schiebermechanismus derart geschwenkt werden kann, dass die Steckerklinken in ihre Freigabestellung gedrückt werden. Leider lässt sich mit dieser Vorrichtung nicht verhindern, dass die Klinken jederzeit betätigbar bleiben. Insbesondere lässt sich diese Sicherungsvorrichtung nicht verriegeln.

Document US 5090916 das als nächstliegender Stand der Technik anzusehen ist beschreibt eine Sicherungsvorrichtung gemäß dem Oberbegriff des Anspruchs 1.

Es ist deshalb Aufgabe der vorliegenden Erfindung eine verriegelbare und in einfachster Weise aufgebaute Sicherungsvorrichtung zu schaffen, welche auch bei engen Platzverhältnissen eine hohe Steckplatzdichte ermöglicht und mit bestehenden Steckeranordnungen, insbesondere mit genormten Steckern verwendbar ist, d.h. keine Änderungen der bestehenden Steckerformen erforderlich macht.

Diese Aufgabe wird erfindungsgemäss mit einer Sicherungsvorrichtung ("patch guard") gelöst, welche die Merkmale des Anspruchs 1 aufweist und insbesondere mit einer Sicherungsvorrichtung für einen mindestens eine Sperrklinke aufweisenden Stecker einer Steckverbindung, welche Sicherungsvorrichtung ein verriegelbares Verschlussteil aufweist, welches die manuelle Betätigung der mindestens einen Sperrklinke verhindert, wobei dieses Verschlussteil ein am Stecker fixierbares Verschluss-Unterteil umfasst, auf welches ein separates Verschluss-Oberteil aufgesetzt ist.

Vorzugsweise ist das Verschluss-Unterteil derart ausgebildet ist, dass dieses auf den Stecker form- und/oder kraftschlüssig aufschnappbar ist. Zur Sicherung der Steckverbindung weist das Schieberteil sperrklinkenseitig mindestens ein Verkeilungselement aufweist, welches bei Schliessstellung des Schieberteils unter der mindestens einen Sperrklinke liegt. In einer anderen Ausführungsform weist das Schieberteil dazu sperrklinkenseitig mindestens ein Abdeckelement aufweist, welches bei Schliessstellung des Schieberteils über der mindestens einen Sperrklinke liegt und eine Manipulation derselben verunmöglicht.

In einer bevorzugten Ausführungsform der Erfindung ist das Schieberteil mit dem Verschluss-Unterteil verriegelbar. Damit soll die Sicherheit vor unerwünschten Manipulationen gewährleistet werden. Vorzugsweise ist dazu das Schieberteil mit Hilfe von mindestens einem am Verschluss-Unterteil angebrachten Verriegelungselement mit dem Verschluss-Unterteil verriegelbar. Es versteht sich, dass das Verriegelungselement ebenso gut am Verschluss-Oberteil, resp. am Schieberteil befestigt sein kann.

Insbesondere kann das Verriegelungselement als separates Bauteil und vorzugsweise als Federzunge ausgebildet sein derart, dass diese in Schliessstellung in eine Raststelle des verschiebbaren Gegenstücks einrastet. Um das Schieberteil wieder zu entriegeln kann das Verriegelungselement mit Hilfe eines separaten Werkzeugs, insbesondere eines Schlüssels wieder aus der Raststelle gelöst (release) werden.

In einer besonderen Ausführungsform ist das Schieberteil mit einem Sperrklinken-Niederhalter versehen, welcher beim Verschieben des Schieberteils von der Schliessstellung in die Freigabestellung die Sperrklinke niederdrückt und damit das sofortige Trennen des Steckverbinders ohne weitere Manipulationen erlaubt.

In einer weiteren Ausführungsform der Erfindung ist das Verschluss-Oberteil als Gehäuseteil ausgebildet ist, welches ein Freigabeelement abdeckt, welches Freigabeelement mit Hilfe eines separaten Werkzeugs, insbesondere eines Schlüssels betätigbar ist, derart, dass dieses Freigabeelement bei Betätigung mit dem Werkzeug die Sperrklinke niederdrückt und damit ein einfaches Auftrennen der Steckverbindung erlaubt.

Bei einer Weiterbildung der erfindungsgemässen Sicherungsvorrichtung ist das Verschluss-Oberteil mit einer auswechselbaren Codierung, insbesondere mit einer Farbcodierung ausrüstbar. Solche Codierungen haben sich bei der Montage von Steckverbindungen bewährt und erleichtern dem Fachmann die korrekte Zuordnung und Bestückung.

Diese Erfindung lässt sich bei allen konventionellen, Klinken aufweisenden Steckverbindern verwenden, insbesondere auch an LWL-Verbindern, wie LC-Verbindern, SG-Verbindern, Opti-Jack-Verbindern, MT-Verbindern oder an RJ-Verbindern.

Die Erfindung soll im folgenden am Beispiel eines genormten Steckverbinders, insbesondere anhand eines RJ-45 Steckers und mit Hilfe der Figuren näher erläutert. Dabei zeigen:
- Fig. 1:: räumliche Darstellung eines konventionellen RJ-45 Steckers mit Knickschutz;
- Fig. 2:: räumliche Darstellung des Steckers gemäss Fig.1 mit einem Verschluss-Unterteil;
- Fig. 3:: räumliche Darstellung des Steckers gemäss Fig. 2 mit einem Schieberteil in Freigabestellung;
- Fig. 4:: räumliche Darstellung des Steckers gemäss Fig. 3 mit einem Schieberteil in Schliessstellung;
- Fig. 5:: räumliche Darstellung des Steckers gemäss Fig. 4 mit Farbcodierungs-Clip;
- Fig. 6:: räumliche Darstellung des Steckers gemäss Fig. 5 in Schliessstellung und mit eingestecktem Schlüssel zur Entriegelung;
- Fig. 7:: räumliche Darstellung des Steckers gemäss Fig. 6 mit eingestecktem Schlüssel in Freigabestellung;
- Fig. 8:: räumliche Darstellung des Steckers mit einem Klinken-Niederhalter;
- Fig. 9:: räumlich Darstellung des Steckers gemäss Fig. 1 mit einem anderen Verschluss-Unterteil;
- Fig. 10:: räumliche Darstellung des Steckers gemäss Fig. 9 mit geöffnetem Gehäuseteil;
- Fig. 11:: räumliche Darstellung des Steckers gemäss Fig. 9 mit geschlossenem Gehäuseteil und Werkzeug für die Entriegelung.

Unter Steckverbinder soll hier ein Bauelement verstanden werden, welches es ermöglicht mit Hilfe eines passenden Gegenstücks, eine Verbindungen zwischen getrennten elektrischen und/oder optischen Leitern herzustellen. Steckverbindungen bestehen also immer aus zwei Steckverbindern, in der Regel einem Stecker und einer Buchse, allenfalls Adapter. Unter Stecker soll im folgenden jede Art von einsteckbaren Verbindern verstanden werden, insbesondere also auch ein steckbarer LWL-Verbinder. In der Regel umfassen diese bekannten Stecker ein Gehäuse mit einer Sperrklinke mit oder ohne Knickschutz.

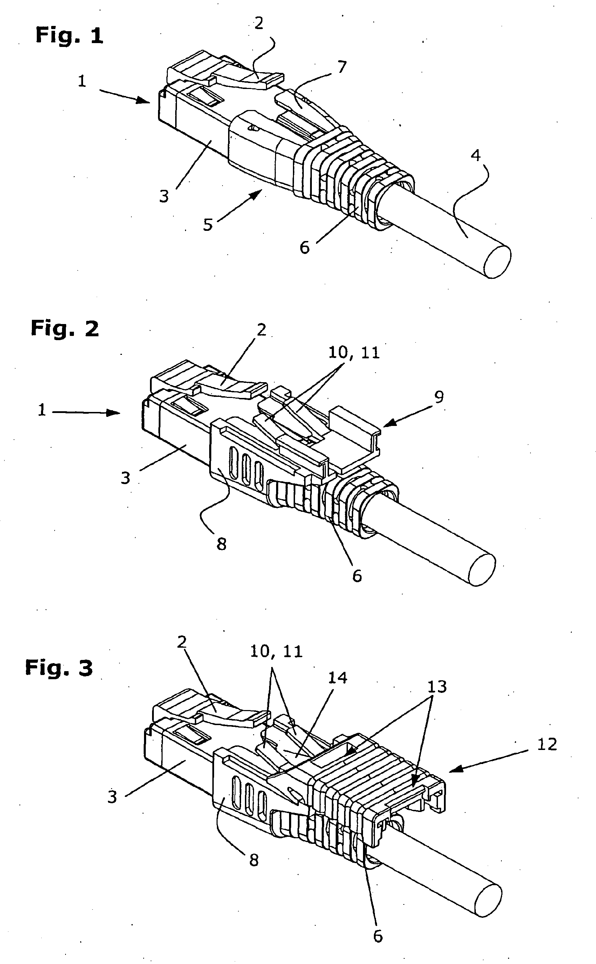

Der in Fig.1 dargestellte Stecker 1 ist ein konventioneller RJ-45 Stecker mit einer Sperrklinke 2. Diese Sperrklinke rastet im eingesteckten Zustand in ein Gegenstück - eine Buchse - ein und verhindert eine ungewollte Trennung der Steckverbindung. Derartige Stecker weisen in aller Regel ein Schirmblech 3 auf, welches die Kontakte und deren Zuleitungen vor äusseren Störfeldern abschirmt. Diese Zuleitungen werden in einem Kabel 4 geführt. Es hat sich bewährt die Stelle zwischen Stecker 1 und Kabel 4 mit einem Knickschutz 5, wie er beispielsweise in der EP-1'128'487 beschrieben ist, zu versehen. Dieser Knickschutz 5 verringert die mechanische Belastung, insbesondere Zugkräfte und Biegemomente, an den einzelnen Kontakten und Zuleitungen innerhalb des Steckers 1. Der in dieser Figur 1 dargestellte Knickschutz 5 weist einen flexiblen Teil 6 und einen festen Gehäuseteil 7 auf, welcher geeignet ist zusätzliche Funktionsteile, wie beispielsweise die in der genannten EP-1'128'487 beschriebenen Codierungsmittel, zu tragen.

Fig. 2 zeigt denselben RJ-45 Stecker 1 mit Sperrklinke 2, Schirmblech 3 und Knickschutz 5, jedoch mit einem aufgesetzten Verschluss-Unterteil 8. Dieses Verschluss-Unterteil 8 lässt sich in der bevorzugten Ausführungsform in einfacher Weise auf das feste Gehäuseteil 7 des Knickschutzes 5 aufschnappen, was zu einer form- und/oder kraftschlüssig Befestigung führt. Andere Befestigungstechniken (wie Kleben, Umspritzen, etc.) sind dem Fachmann hinlänglich bekannt und können ebenso gut zur Anwendung kommen. Es versteht sich, dass in geeigneten Fällen Verschluss-Unterteil und Knickschutz auch einteilig ausgebildet sein können, d.h. aus einem Stück bestehen. Dieses Verschluss-Unterteil 8 weist darüber hinaus ein Schieberführungsteil 9 und zwei Verriegelungselemente 10, 11 auf. Dieses Schieberführungsteil 9 dient der Aufnahme eines weiteren Bauteils, einem Schieberteil 12 (Fig. 3), und erlaubt dessen Gleitbewegung in eine Schliessstellung und eine Freigabestellung. Die in dieser Fig. 2 dargestellten Verriegelungselemente 10, 11 sind einstückig mit dem Verschluss-Unterteil 8 verbunden und dienen der Verriegelung des Schieberteils 12 in seiner Schliessstellung. Natürlich können diese Verriegelungselemente 10, 11 auch aus einem metallischen Material gefertigt sein und entweder im Verschluss-Unterteil 8 oder im Verschluss-Oberteil 12 verankert sein.

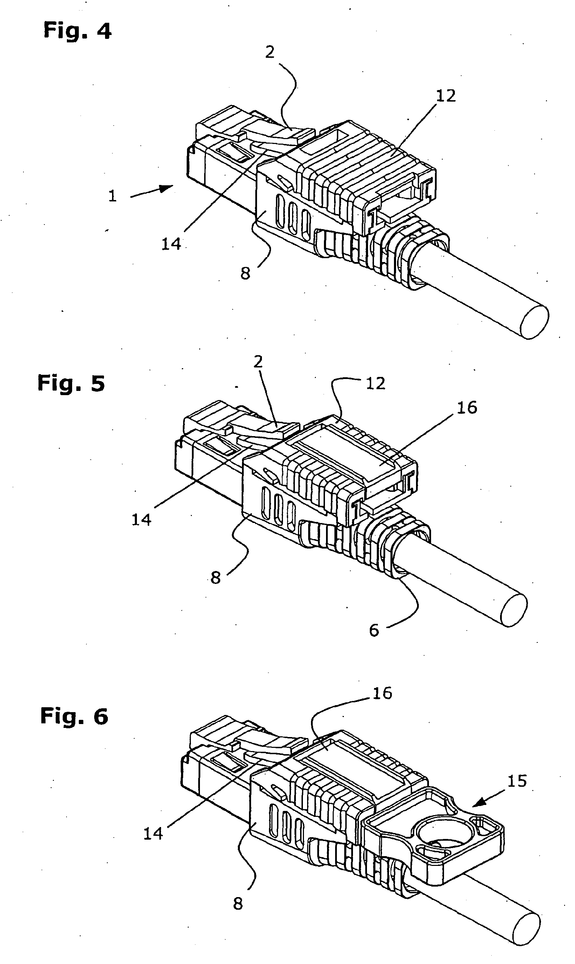

In Fig. 3 ist derselbe Stecker 1 wie in Fig. 2, mit einem Verschluss-Unterteil 8 dargestellt, jedoch mit einem auf dem Schieberführungsteil 9 (Fig. 2) aufgesetzten Schieberteil 12. Dieses Schieberteil 12 kann auf dem Schieberführungsteil 9 (Fig. 2) des Verschluss-Unterteils 8 gleiten und lässt sich wie ein Schlitten in axialer Richtung hin und her bewegen. In Fig. 3 befindet sich das Schieberteil 12 in seiner Freigabestellung, d.h. die Sperrklinke 2 ist frei zugänglich und kann betätigt werden. Die beiden als Federzunge ausgebildeten Verriegelungselemente 10, 11 liegen ebenfalls frei. Wesentlich für das erfindungsgemässe funktionieren der hier näher ausgeführten Sicherungsvorrichtung ist ein sperrklinkenseitig angeordnetes Verkeilungselement 14, welches bei Schliessstellung des Schieberteils 12 unter die Sperrklinke 2 zu liegen kommt. Dabei erweist es sich als wichtig, dass dieses Verkeilungselement 14 möglichst den gesamten Raum unter der Sperrklinke 2 einnimmt. Es versteht sich, dass für dieselbe Funktion anstelle eines Verkeilungselementes 14 auch ein Abdeckelement vorgesehen sein kann. Bei dem in Fig. 3 dargestellten Schieberteil 12 sind ausserdem noch Aussparungen 13 vorgesehen, welche der Aufnahme eines Farbcodierungs-Clips 16 (Fig. 5) dienen. Es versteht sich, dass anstelle eines Farbcodierungs-Clips 16 auch andere bekannte Ausführungsformen von Codierungsmitteln verwendbar sind, insbesondere in Form von geometrisch oder mechanisch ineinandergreifenden Verzahnungen.

Fig. 4 zeigt den Stecker gemäss Fig. 3, jedoch mit einem in Schliessstellung positionierten Schieberteil 12. Dabei ragt das Verkeilungselement 14 im wesentliche vollständig unter die Sperrklinke 2 und verhindert damit die Betätigung derselben. Gleichzeitig liegen die beiden Verriegelungselemente 10, 11 (Fig. 3) nun im Innern des Schieberteils 12 und greifen in geeignete Raststellen ein, um das Schieberteil 12 in dieser Schliessstellung zu fixieren, resp. zu verriegeln. Das Schieberteil 12 lässt sich aus dieser Position nicht ohne weiteres wieder zurück in die Freigabestellung schieben. Damit wird sichergestellt, dass sich der Stecker 1 nicht ungewollt und/oder durch unerwünschte Fehlmanipulation aus der Steckverbindung trennen lässt, was unter Umständen zu irreparablen Schäden führen kann, bspw. zu unwiederbringlichen Datenverlusten bis hin zur Zerstörung von Maschinen und/oder Werkzeugen. Es versteht sich, dass der Fachmann ohne weiteres auch anders ausgestaltete Verriegelungselemente 10, 11 verwenden kann, insbesondere kann er diese auch am Schieberteil 12 anbringen, oder können diese aus einem anderen Material, vorzugsweise aus Metall, gefertigt und eingesetzt sein.

Fig. 5 zeigt dieselbe Sicherungsvorrichtung, wie in Fig. 4, jedoch ist das Schieberteil 12 mit einem Farbcodierungs-Clip 16 ausgerüstet. Das Schieberteil 12 befindet sich in Schliessstellung und verhindert das Niederdrücken der Sperrklinke 2. Gleichzeitig wird das Schieberteil 12 durch die eingerasteten Verriegelungselemente 10, 11 verriegelt, d.h. dieses Teil lässt sich nicht mehr ohne weiteres aus dieser Position verschieben. Um dies zu ermöglichen ist ein separater Schlüssel 15 (Fig. 6) erforderlich, welcher imstande ist, die beiden Verriegelungselemente 10, 11 aus ihren Raststellen (nicht dargestellt) heraus zu drücken. Erst dies erlaubt es, das Schieberteil 12 wieder auf der Schieberteilführung 9 (Fig. 2) zu verschieben und insbesondere in die Freigabestellung zu bringen.

Fig. 6 zeigt die Sicherungsvorrichtung gemäss Fig. 5 , jedoch mit einem eingesetzten Schlüssel 15. Befindet sich der Schlüssel 15 in der hier dargestellten Position, ist das Schieberteil 12 wohl entriegelt, jedoch immer noch in Schliessstellung, d.h. verhindert das Schieberteil 12 immer noch die Betätigung der Sperrklinke 2.

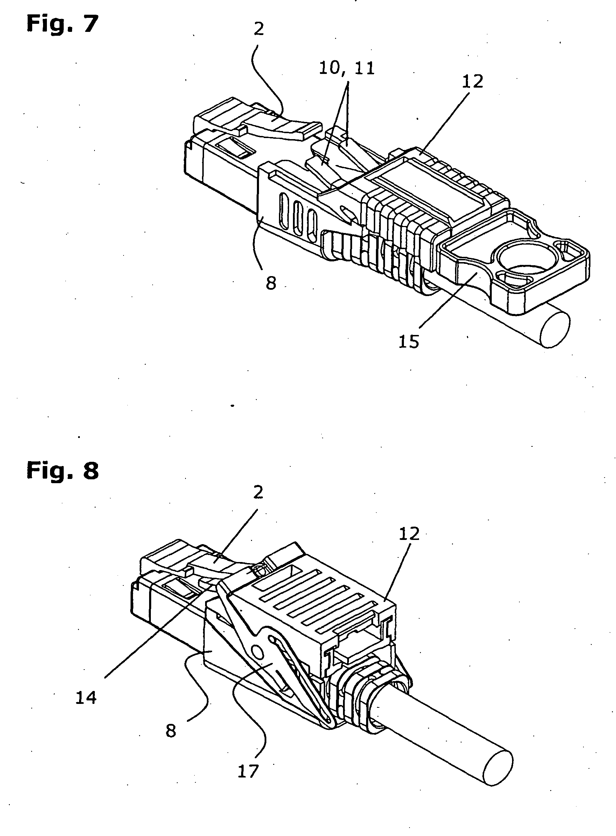

Erst wenn das Schieberteil 12 in seine Freigabestellung gebracht worden ist, wie in Fig. 7 dargestellt, wird auch die Sperrklinke 2 des Steckers 1 wieder zugänglich und kann diese wieder betätigt werden, um den Stecker 1 aus seiner Verbindung zu lösen. Die Geometrie des Schlüssels 15 ist an die besondere Form und Zugänglichkeit der Verriegelungselemente 10, 11 angepasst. Die Verwendung von fälschungssicheren Schlüssel- und Schlossgeometrien liegen im normalen technischen Handeln des Fachmanns und ist nicht Gegenstand der vorliegenden Erfindung.

Eine besondere Weiterbildung der erfindungsgemässen Sicherungsvorrichtung ist in Fig. 8 dargestellt. Bei dieser Ausführungsform ist am Verschluss-Unterteil 8 ein bügelartiger Sperrklinken-Niederhalter 17 angelenkt. Durch das Verschieben des Schieberteils 12 aus der in Fig. 8 dargestellten Schliessstellung in die Freigabestellung wird der Sperrklinken-Niederhalter 17 derart verschwenkt, dass dieser die Sperrklinke 2 nach unten drückt und in Freigabestellung die Sperrklinke 2 niedergedrückt hält. Damit braucht diese nach der Freigabe nicht mehr separat betätigt zu werden und die Steckverbindung kann in einfachster Weise aufgetrennt werden.

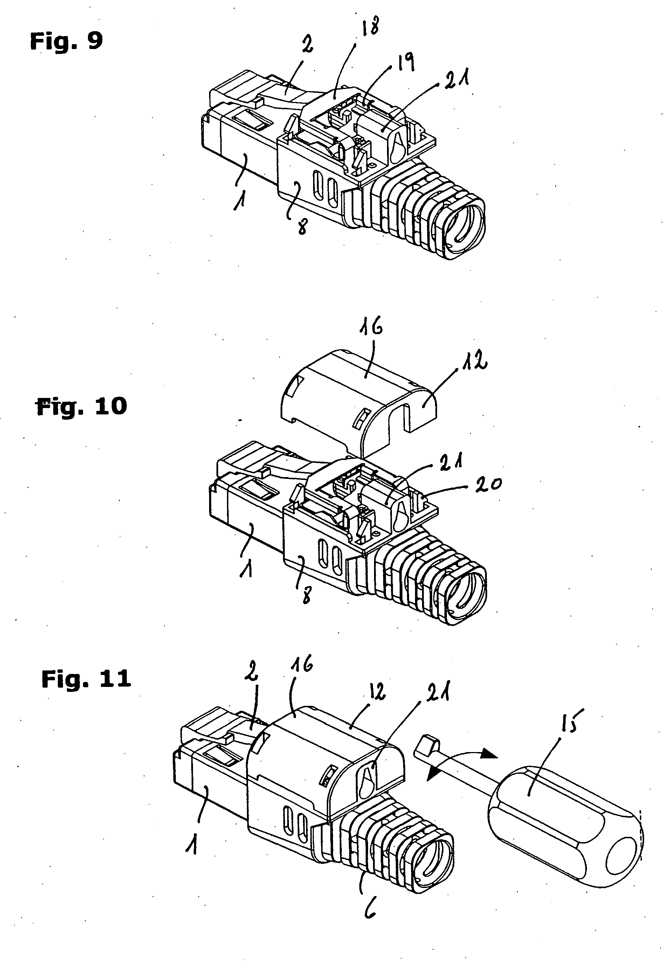

Figur 9 zeigt eine weitere Ausgestaltung der erfindungsgemässen Sicherungsvorrichtung ohne Gehäuseteil. Bei dieser Vorrichtung ist das über dem Stecker 1 angebrachte Verschluss-Unterteil 8 mit einem Freigabeelement 18 versehen. Dieses weist ein bügelförmiges Bauteil auf, welches über die Sperrklinke 2 des Steckers 1 ragt. Dieses bügelförmige Bauteil ist federnd ausgebildet und lässt sich von einem Werkzeug über seitliche Laschen 19 niederdrücken. Mit dem Niederdrücken des bügelförmigen Bauteils dieses Freigabeelementes 18 wird die Sperrklinke 2 ebenfalls niedergedrückt und aus ihrer Sperrposition herausgedrückt, womit der Stecker aus der Steckverbindung gezogen werden kann, d.h. die Steckverbindung getrennt werden kann.

Fig. 10 macht deutlich wie das Gehäuseteil 12 der erfindungsgemässen Sicherungsvorrichtung auf das Verschluss-Unterteil 8 aufgesetzt werden kann. In den Eckbereichen angeordnete Schnappriegel halten das Gehäuseteil 12 im montierten Zustand am Verschluss-Unterteil fest. Das Verschluss-Unterteil 8 weist darüber hinaus noch ein Zugangselement 21 auf, welches einem geeigneten Werkzeug den Zugang zum Freigabeelement 18, resp. dessen Laschen 19 ermöglicht. Das Gehäuseteil 12 ist vorzugsweise mit einer Fläche für die Codierung 16 versehen.

Wie aus Fig. 11 ersichtlich, überdeckt das Gehäuseteil 12 im montierten Zustand das gesamte Freigabeelement 18 und damit auch einen wesentlichen Teil der Sperrklinke 2.

Um das Freigabeelement betätigen zu können muss ein Werkzeug 15, hier in Form eines Schlüssels, erst durch das Zugangselement 21 geführt werden und dann im eingesteckten Zustand gedreht werden. Dadurch kann die Sperrklinke 2 aus ihrer Raststellung gelöst werden und die Steckverbindung getrennt werden.

Es versteht sich, dass die Erfindung hier nur beispielsweise für einen RJ-45 Stecker beschrieben wurde und die erfindungsgemässe Sicherungsvorrichtung für alle Arten von Steckverbindern, welche eine Klinke oder einen ähnlichen Verrastungsmechanismus aufweisen, verwendbar ist. So können elektrische, ebenso wie optische oder elektrooptische Mono- oder Mehrfach-Verbinder mit der erfindungsgemässen Sicherungsvorrichtung ausgerüstet werden.

## Patentansprüche

1. Sicherungsvorrichtung für einen mindestens eine Sperrklinke (2) aufweisenden Stecker (1) einer Steckverbindung, welche Sicherungsvorrichtung ein verriegelbares Verschlussteil aufweist, welches die manuelle Betätigung der mindestens einen Sperrklinke (2) verhindert, **dadurch gekennzeichnet, dass** dieses Verschlussteil (8, 12) ein am Stecker (1) fixierbares Verschluss-Unterteil (8) umfasst, auf welches ein separates Verschluss-Oberteil (12) aufgesetzt ist.

2. Sicherungsvorrichtung nach Anspruch 1, **dadurch gekennzeichnet, dass** das Verschluss-Unterteil (8) derart ausgebildet ist, dass dieses auf den Stecker (1) form- und/oder kraftschlüssig aufschnappbar ist.

3. Sicherungsvorrichtung nach Anspruch 2, **dadurch gekennzeichnet, dass** das Verschluss-Oberteil (12) als Schieberteil ausgebildet ist, welches Schieberteil in eine Schliessstellung und in eine Freigabestellung verschiebbar ist und welches Schieberteil sperrklinkenseitig mindestens ein Verkeilungselement (14) aufweist, welches Verkeilungselement (14) bei Schliessstellung des Schieberteils unter der mindestens einen Sperrklinke (2) liegt.

4. Sicherungsvorrichtung nach Anspruch 2, **dadurch gekennzeichnet, dass** das Verschluss-Oberteil (12) als Schieberteil ausgebildet ist, welches Schieberteil in eine Schliessstellung und in eine Freigabestellung verschiebbar ist und welches Schieberteil sperrklinkenseitig mindestens ein Abdeckelement aufweist, welches Abdeckelement bei Schliessstellung des Schieberteils über der mindestens einen Sperrklinke (2) liegt.

5. Sicherungsvorrichtung nach Anspruch 4, **dadurch gekennzeichnet, dass** das Schieberteil mit Hilfe von mindestens einem am Verschluss-Unterteil (8) angebrachten Verriegelungselement (10, 11) mit dem Verschluss-Unterteil (8) verriegelbar ist.

6. Sicherungsvorrichtung nach Anspruch 4, **dadurch gekennzeichnet, dass** das Schieberteil mit Hilfe von mindestens einem am Schieberteil angebrachten Verriegelungselement (10, 11) mit dem Verschluss-Unterteil (8) verriegelbar ist.

7. Sicherungsvorrichtung nach Anspruch 5 oder 6, **dadurch gekennzeichnet, dass** das Verriegelungselement (10, 11) als ein separates Bauteil ausgebildet ist.

8. Sicherungsvorrichtung nach einem der Ansprüche 5 bis 7, **dadurch gekennzeichnet, dass** das Verriegelungselement (10, 11) als Federzunge ausgebildet ist.

9. Sicherungsvorrichtung nach einem der Ansprüche 5 bis 8, **dadurch gekennzeichnet, dass** das Schieberteil mit Hilfe eines separaten Werkzeugs, insbesondere eines Schlüssels (15) entriegelbar ist.

10. Sicherungsvorrichtung nach einem der Ansprüche 1 bis 9, **dadurch gekennzeichnet, dass** das Schieberteil mit einem Sperrklinken-Niederhalter (17) versehen ist, welcher beim Verschieben des Schieberteils von der Schliessstellung in die Freigabestellung die Sperrklinke (2) niederdrückt und damit ein einfaches Trennen des Steckverbinders erlaubt.

11. Sicherungsvorrichtung nach Anspruch 2, **dadurch gekennzeichnet, dass** das Verschluss-Oberteil (12) als Gehäuseteil ausgebildet ist, welches ein Freigabeelement (18) abdeckt, welches Freigabeelement (18) mit Hilfe eines separaten Werkzeugs, insbesondere eines Schlüssels (15) betätigbar ist, derart, dass dieses Freigabeelement (18) bei Betätigung die Sperrklinke (2) niederdrückt und damit ein einfaches Auftrennen der Steckverbindung erlaubt.

12. Sicherungsvorrichtung nach einem der Ansprüche 3, 4 oder 11, **dadurch gekennzeichnet, dass** das Verschluss-Oberteil (12) mit einer auswechselbaren Codierung, insbesondere einer Farbcodierung (16) ausgerüstet ist.

## Claims

1. Security device for a plug (1) of a plug connector having at least one catch (2), said security device having a lockable fastener part, which prevents manual operation of the at least one catch (2), **characterised in that** this fastener part (8, 12) comprises a fastener bottom part (8), which can be fixed to the plug (1) and onto which a separate fastener top part (12) is attached.

2. Security device according to claim 1, **characterised in that** the fastener bottom part (8) is configured such that this can be snapped onto the plug (1) in a positive-locking and/or non-positive manner.

3. Security device according to claim 2, **characterised in that** the fastener top part (12) is configured as a slider part, and said slider part is displaceable into a closing position and into a release position and has at least one wedging element (14) on the catch side, said wedging element (14) lying below the at least one catch (2) when the slider part is in the closing position.

4. Security device according to claim 2, **characterised in that** the fastener top part (12) is configured as a slider part, and said slider part is displaceable into a closing position and into a release position and has at least one covering element on the catch side, said covering element lying above the at least one catch (2) when the slider part is in the closing position.

5. Security device according to claim 4, **characterised in that** the slider part can be locked with the fastener bottom part (8) by means of at least one locking element (10, 11) attached to the fastener bottom part (8).

6. Security device according to claim 4, **characterised in that** the slider part can be locked with the fastener bottom part (8) by means of at least one locking element (10, 11) attached to the slider part.

7. Security device according to claim 5 or 6, **characterised in that** the locking element (10, 11) is configured as a separate structural part.

8. Security device according to one of claims 5 to 7, **characterised in that** the locking element (10, 11) is configured as a spring tab.

9. Security device according to one of claims 5 to 8, **characterised in that** the slider part can be unlocked by means of a separate tool, in particular a key (15).

10. Security device according to one of claims 1 to 9, **characterised in that** the slider part is provided with a catch holder (17), which presses down the catch (2) when the slider part is displaced from the closing position into the release position and thus allows a simple separation of the plug connector.

11. Security device according to claim 2, **characterised in that** the fastener top part (12) is configured as a housing part, which covers a release element (18), and said release element (18) can be actuated by means of a separate tool, in particular a key (15), in such a manner that this release element (18) presses down the catch (2) during actuation and thus allows a simple separation of the plug connector.

12. Security device according to one of claims 3, 4 or 11, **characterised in that** the fastener top part (12) is equipped with a replaceable coding, in particular a colour coding (16).

## Revendications

1. Dispositif de sécurité pour une fiche mâle (1) présentant au moins un cliquet d'arrêt (2) d'un connecteur enfichable, lequel dispositif de sécurité présente un élément de fermeture verrouillable, qui empêche l'actionnement manuel de l'au moins un cliquet d'arrêt (2), **caractérisé en ce que** cet élément de fermeture (8, 12) comprend un élément de fermeture inférieur (8) pouvant être fixé sur la fiche mâle (1), sur lequel est placé un élément de fermeture supérieur (12) séparé.

2. Dispositif de sécurité selon la revendication 1, **caractérisé en ce que** l'élément de fermeture inférieur (8) est réalisé de telle sorte que celui-ci peut être fixé par encliquetage par correspondance de force ou de forme sur la fiche mâle (1).

3. Dispositif de sécurité selon la revendication 2, **caractérisé en ce que** l'élément de fermeture supérieur (12) est réalisé sous forme de coulisseau, lequel coulisseau peut être déplacé dans une position fermée et dans une position de libération et lequel coulisseau présente côté cliquet d'arrêt au moins un élément de calage (14), lequel élément de calage (14) se trouve sous l'au moins un cliquet d'arrêt (2) lorsque le coulisseau est en position fermée.

4. Dispositif de sécurité selon la revendication 2, **caractérisé en ce que** l'élément de fermeture supérieur (12) est réalisé sous forme de coulisseau, lequel coulisseau peut être déplacé dans une position fermée et dans une position de libération et lequel coulisseau présente côté cliquet d'arrêt au moins un élément de recouvrement, lequel élément de recouvrement se trouve au-dessus de l'au moins un cliquet d'arrêt (2) lorsque le coulisseau est en position fermée.

5. Dispositif de sécurité selon la revendication 4, **caractérisé en ce que** le coulisseau peut être verrouillé avec l'élément de fermeture inférieur (8) à l'aide d'au moins un élément de verrouillage (10, 11) agencé au niveau de l'élément de fermeture inférieur (8).

6. Dispositif de sécurité selon la revendication 4, **caractérisé en ce que** le coulisseau peut être verrouillé avec l'élément de fermeture inférieur (8) à l'aide d'au moins un élément de verrouillage (10, 11) agencé au niveau du coulisseau.

7. Dispositif de sécurité selon la revendication 5 ou 6, **caractérisé en ce que** l'élément de verrouillage (10, 11) est réalisé sous forme d'élément constitutif séparé.

8. Dispositif de sécurité selon l'une quelconque des revendications 5 à 7, **caractérisé en ce que** l'élément de verrouillage (10, 11) est réalisé sous forme de languette élastique.

9. Dispositif de sécurité selon l'une quelconque des revendications 5 à 8, **caractérisé en ce que** le coulisseau peut être déverrouillé à l'aide d'un outil séparé, en particulier d'une clé (15).

10. Dispositif de sécurité selon l'une quelconque des revendications 1 à 9, **caractérisé en ce que** le coulisseau est pourvu d'un serre-flan de cliquet d'arrêt (17), qui appuie sur le cliquet d'arrêt (2) lors du déplacement du coulisseau de la position fermée à la position de libération et permet ainsi une séparation simple du connecteur enfichable.

11. Dispositif de sécurité selon la revendication 2, **caractérisé en ce que** l'élément de fermeture supérieur (12) est réalisé sous forme d'élément de boîtier, lequel recouvre un élément de libération (18), lequel élément de libération (18) peut être actionné à l'aide d'un outil séparé, en particulier d'une clé (15), de telle sorte que cet élément de libération (18) appuie sur le cliquet d'arrêt (2) en cas d'actionnement et permet ainsi une séparation simple du connecteur enfichable.

12. Dispositif de sécurité selon l'une quelconque des revendications 3, 4 ou 11, **caractérisé en ce que** l'élément de fermeture supérieur (12) est doté d'un codage interchangeable, en particulier d'un codage couleur (16).
